# EUROPÄISCHE PATENTSCHRIFT

(11) **EP 1 754 932 B1**
(45) Veröffentlichungstag und Bekanntmachung des Hinweises auf die Patenterteilung: **09.06.2010**
(21) Anmeldenummer: 06016283.1
(22) Anmeldetag: 04.08.2006
(51) Int. Cl.: B29C 65/02, B29C 45/14, F21V 17/00, F21V 15/015, F21V 17/10, F21V 3/04, F21V 5/00, B29C 65/06, B29C 65/08, B29C 65/20, B29C 65/16

(54) **Mehrteiliges Bauelement, insbesondere Scheinwerfer für Kraftfahrzeuge, mit einer Fläche, um eine Verbindungsnaht zwischen zwei Teilen zu maskieren**
Component of several parts, in particular vehicle headlamp, having a covering surface to hide a weld seam between two parts
Elémént de construction à plusieurs parties, en particulier projecteur de véhicule, avec une surface pour masquer un joint de raccord entre deux parties

(30) Priorität: 17.08.2005 DE 102005040225
(43) Veröffentlichungstag der Anmeldung: 21.02.2007
(73) Patentinhaber: odelo GmbH, 71409 Schwaikheim (DE)
(72) Erfinder: Teichmann, Volker, 73340 Amstetten (DE)
(74) Vertreter: Kaufmann, Ursula Josefine

(56) Entgegenhaltungen:
- EP-A- 1 188 534
- WO-A-2004/003429
- DE-A1- 10 333 606
- JP-A- 11 176 204

## Beschreibung

Die Erfindung betrifft ein mehrteiliges Bauelement mit einer Verbindungsnaht und Verfahren zur Herstellung eines Bauelements nach den Oberbegriffen der unabhängigen Ansprüche.

Bei mehrteiligen Bauelementen mit einer Verbindungsnaht zwischen einem transparenten ersten Teil und einem zweiten Teil ist das Problem bekannt, dass die Verbindungsnaht von einem Betrachter wahrgenommen werden kann. Stellt das transparente erste Teil bestimmungsgemäß eine Sichtseite des Bauelements dar, wirkt die Verbindungsnaht häufig störend und beeinträchtigt den Gesamteindruck des Bauelements.

Bei Leuchteneinheiten von Kraftfahrzeugen, die ein Beispiel für solche mehrteiligen Bauelemente darstellen, wirkt eine solche Verbindungsnaht zwischen einer Außenscheibe bzw. Lichtscheibe und dem Reflektorteil, der Leuchteneinheit besonders störend, da die hochwertige Erscheinung der Leuchteneinheit durch eine unregelmäßige Verbindungsnaht im Blickfeld des Betrachters beeinträchtigt ist, was bei einem hochpreisigen Produkt wie einem Kraftfahrzeug häufig nicht akzeptiert wird. Die umlaufende Verbindungsnaht befindet sich in Randbereich der Leuchteneinheit. Um die Verbindungsnaht zu kaschieren, wird daher auf die Außenseite des transparenten Deckels eine passende streifenförmige Abdeckung aus einer abdeckenden Masse, beispielsweise eine Kunststoffschicht, aufgetragen. Dies ist aufwändig, und es kann passieren, dass nach längerem Einsatz der Leuchteneinheit bzw. des Fahrzeugs diese Abdeckung beschädigt wird.

Die DE 103 33 606 A1 offenbart eine Leuchte eines Kraftfahrzeugs, bei der die Lichtscheibe an ihrem Randbereich innenseitig eine opake Zwischenschicht aufweist. Die Zwischenschicht umschließt den Steg der Lichtscheibe und erstreckt sich über den Steg hinaus in Richtung der Mitte der Lichtscheibe.

Aufgabe der Erfindung ist es, ein verbessertes mehrteiliges Bauelement mit einer Verbindungsnaht und ein verbessertes Verfahren zur Herstellung eines Bauelements anzugeben, das eine dauerhafte Abdeckung so sicherstellt, dass die Verbindungsnaht zumindest weitgehend dem Blick eines Betrachters entzogen ist und ein nachträgliches Auftragen einer Abdeckung unnötig macht.

Die Aufgabe wird erfindungsgemäß durch die Merkmale der unabhängigen Ansprüche gelöst. Günstige Ausgestaltungen und Vorteile der Erfindung ergeben sich aus den weiteren Ansprüchen und der Beschreibung.

Bei einem erfindungsgemäßen mehrteiliges Bauelement ist zwischen einer Verbindungsnaht, die zwischen einem wenigstens bereichsweise ersten transparenten Teil und einem zweiten Teil angeordnet ist und einer Außenfläche des transparenten Teils eine optisch abdeckende Fläche angeordnet, die wenigstens bereichsweise die Verbindungsnaht von einer Sichtseite des Bauelements her abdeckt. Ohne die abdeckende Fläche wäre die Verbindungsnaht von außen sichtbar. Die optisch abdeckende Fläche befindet sich innerhalb des transparenten ersten Teils und ist damit durch dessen Körper quasi gekapselt und vollständig vor äußeren Einflüssen, die von außen auf das erste Teil einwirken können, geschützt. Die optisch abdeckende Fläche wird während des Herstellprozesses in das transparente erste Teil eingebracht, womit ein aufwändiges Nacharbeiten des fertig montierten Bauelements entfällt. Unter optisch abdeckend muss nicht zwangsläufig eine völlige Undurchsichtigkeit verstanden werden, solange eine unmittelbare Sichtbarkeit der Verbindungsnaht wenigstens deutlich vermindert ist. Optional kann auch das zweite Teil in vergleichbarer Weise mit einer optisch abdeckenden Fläche ausgebildet sein. Dies ist dann vorteilhaft, wenn auch das zweite Teil des Bauelements an einer oder mehreren etwaigen Nahtstellen transparent ausgebildet ist und eine Sichtseite bilden soll, die bestimmungsgemäß einem etwaigen Betrachter zugänglich ist, beispielsweise ein wenigstens teilweise transparenter Kasten. Vorzugsweise bilden das erste und zweite Teil Bestandteile eines Gehäuses des Bauelements. Es können auch weitere Teile des Bauelements mit einer derartigen optisch abdeckenden Fläche versehen sein.

Vorteilhafterweise ist das transparente erste Teil aus einem ersten, der Verbindungsnaht zugewandten Teilbereich und einem zweiten, der Außenfläche zugewandten Teilbereich gebildet. Zwischen diese Teilbereiche kann die optisch abdeckende Fläche eingebracht werden.

Dabei kann die optisch abdeckende Fläche bevorzugt eine Metallisierungsschicht umfassen, beispielsweise aus Aluminium oder Chrom, wenn ein silbriges Aussehen erwünscht ist, oder eine Metallverbindung, beispielsweise ein Nitrid wie Titannitrid, wenn ein Goldton erwünscht ist. Die optisch abdeckende Fläche kann auch eine eingefärbte Kunststoffschicht umfassen, mit der eine Vielzahl von gewünschten Farbeindrücken erreicht werden kann. Die optisch abdeckende Fläche kann auch ein Einlegteil umfassen, was bei relativ geraden transparenten Teilen vorteilhaft sein kann. Die genannten Materialien sind lediglich beispielhaft, selbstverständlich kann der Fachmann bei Bedarf geeignete andere Materialien verwenden. Ist die optisch abdeckende Fläche auf dem ersten Teilbereich angeordnet, wird der zweite Teilbereich darüber angeordnet und fest verbunden.

Bevorzugt kann das transparente erste Teil als Spritzgussteil ausgebildet sein. Mit der Spritzgusstechnik lässt sich die optisch abdeckende Fläche besonders einfach in einen Herstellprozess des transparenten Teils integrieren.

Besonders bevorzugt sind das transparente erste Teil und das zweite Teil Bestandteile einer Leuchteneinheit, insbesondere einer FahrzeugLeuchteneinheit. Hier kann mit Vorteil die optisch abdeckende Fläche so ausgebildet sein, dass im Randbereich des transparenten ersten Teils auf der Sichtseite der Leuchteneinheit auch Kanten der Karosserie, in die die Leuchteneinheit eingesetzt ist, mit abgedeckt werden kann. Diese Karosseriebereiche im Einsetzbereich von Leuchteneinheiten sind häufig nicht als dekorative Fläche des Fahrzeugs ausgebildet und lassen sich praktisch auch nachträglich nicht optisch verbessern. Darüber hinaus ist bei solchen Leuchteneinheiten das zweite Teil üblicherweise eine Reflektoreinheit, die hoch verspiegelt ist, wodurch der Übergang zum transparenten, ersten Teil an der Verbindungsnaht besonders grob erscheint. Das optische Erscheinungsbild sowohl der Leuchteneinheit als auch des Kraftfahrzeugs können daher gleichzeitig durch die optisch abdeckende Fläche der Leuchteneinheit verbessert werden. Die Leuchteineinheit stellt eine besonders bevorzugte Ausgestaltung des Bauelements dar. Das Bauelement kann jedoch auch für andere Einsatzzwecke ausgestaltet sein, bei denen ein wenigstens bereichsweise transparentes erstes Teil mit einer in einem durch das erste Teil einsehbaren Sichtbereich liegenden Verbindungsnaht versehen ist, die möglichst verdeckt werden soll.

Bei dem erfindungsgemäßen Verfahren zur Herstellung eines mehrteiligen Bauelements wird ein erster Teilbereich eines transparenten Teils gebildet, dort bereichsweise eine optisch abdeckende Fläche ausgebildet und anschließend ein zweiter Teilbereich ausgebildet. Dadurch wird vorteilhaft bereits während der Herstellung die auf eine spätere Verbindungsnaht im Bauelement abgestimmte optisch abdeckende Fläche erreicht.

Bevorzugt kann die optisch abdeckende Fläche mit PVD- und/oder CVD-Verfahren (PVD = physical vapor deposition, CVD = chemical vapor deposition) auf den ersten Teilbereich aufgetragen werden. Bevorzugt wird Aluminium als dünne Schicht aufgedampft oder mit Kathodenzerstäubung aufgesputtert. Dazu kann der erste Teilbereich mit einer entsprechenden Maskierung versehen werden, so dass nur in einem gewünschten Bereich die Beschichtung aufgetragen wird. Die optisch abdeckende Fläche kann auch aufgespritzt werden, beispielsweise als eingefärbter oder auch als undurchsichtiger Kunststoff. Die optisch abdeckende Fläche kann auch auf dem ersten Teilbereich aufgelegt werden, was bei einem einigermaßen eben ausgebildeten ersten Teilbereich zweckmäßig sein kann. In diesem Fall erübrigt sich eine Maskierung des ersten Teilbereichs, da die abdeckende Fläche als freitragendes und/oder folienartiges Element vor dem Auflegen geformt werden kann.

In einem weiteren bevorzugten Verfahrensschritt kann der mit der optisch abdeckenden Fläche versehene erste Teilbereich mit einem zweiten Teilbereich fest verbunden werden. Die optisch abdeckende Fläche ist dann im transparenten ersten Teil gekapselt und vor äußeren Einflüssen weitgehend geschützt.

Mit besonderem Vorteil kann das transparente erste Teil als Spritzgussteil hergestellt werden. Damit kann zunächst ein Vorspritzling als erster Teilbereich gespritzt und dann die optisch abdeckende Fläche aufgetragen werden. Anschließend kann das Teil mit dem beschichteten ersten Teilbereich in eine Spritzgussform eingelegt und umspritzt und/oder überspritzt werden, wobei der zweite Teilbereich gebildet wird, der dabei automatisch mit dem ersten Teilbereich fest verbunden wird.

Vorzugsweise wird das transparente erste Teil mit dem zweiten Teil verbunden, vorzugsweise fest verbunden. Die Teile können beispielsweise miteinander verschweißt oder verklebt werden. Insbesondere kann das erste Teil mit dem zweiten Teil durch Reibschweißen und/oder Ultraschallschweißen und/oder Heizelement-Schweißen und/oder Vibrationsschweißen und/oder Spiegelschweißen und/oder mittels Einwirken von Laserstrahlung verbunden. Selbstverständlich sind auch andere geeignete Verbindungsverfahren denkbar. Werden Schweißverfahren oder Klebeverfahren genutzt, kann die Verbindungsnaht besonders schmal ausgebildet werden. Es sind jedoch auch Verbindungsmethoden mit Verbindungsmitteln wie Schrauben und dergleichen denkbar. Die optisch abdeckende Fläche kann auf einfache Weise an die Größe bzw. Breite der Verbindungsnaht angepasst werden.

Weitere Vorteile und Einzelheiten der Erfindung werden im Folgenden anhand eines in der Zeichnung beschriebenen bevorzugten Ausführungsbeispiels näher erläutert, ohne auf dieses Ausführungsbeispiel beschränkt zu sein.

Es zeigen:
- Fig. 1: schematisch ein bevorzugtes Bauelement mit einer Verbindungsnaht;
- Fig. 2: eine bevorzugte Leuchteneinheit mit einer Verbindungsnaht.

In den Figuren sind grundsätzlich gleich bleibende oder gleich wirkende Elemente mit denselben Bezugszeichen beziffert.

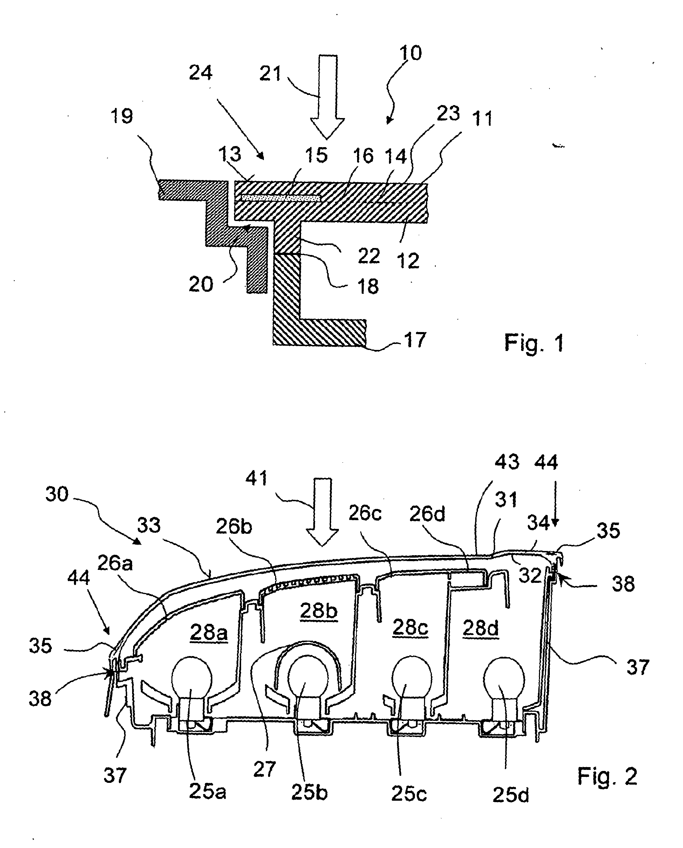

Figur 1 illustriert schematisch ein mehrteiliges Bauelement 10 mit einer Verbindungsnaht 18 zwischen einem transparenten ersten Teil 11 und einem zweiten Teil 17. Das transparente erste Teil 11 bildet mit seiner Außenfläche 13 eine bestimmungsgemäße Sichtseite 23. Die Verbindungsnaht 18 befindet sich in einem durch die Außenfläche 13 hindurch einsehbaren Bereich 24. Dabei weist das transparente erste Teil 11 einen Ansatz 22 auf, an dem außenstirnseitig die Verbindungsnaht 18 angeordnet ist.

Zwischen der Verbindungsnaht 18 und der Außenfläche 13 ist eine optisch abdeckende Fläche 15 angeordnet, die wenigstens bereichsweise die Verbindungsnaht 18 von der Sichtseite 23 her abdeckt. Das Bauelement 10 grenzt beispielsweise an einen Körper 19, beispielsweise eine Wand einer Einbauöffnung, an und überdeckt diesen randseitig an einem Überdeckungsbereich 20.

Das transparente erste Teil 11 ist aus einem ersten, der Verbindungsnaht 18 zugewandten Teilbereich 12 und einem zweiten, der Außenfläche 13 zugewandten Teilbereich 14 gebildet, wobei die Teilbereiche 12, 14 an einer Grenzfläche 16 aneinander stoßen. Die Grenzfläche 16 muss nicht wahrnehmbar sein. Bei einem als Spritzgussteil ausgebildeten Bauelement 10 verschwindet die Grenzfläche 16 nach dem Aufbringen des zweiten Teilbereichs 14.

Die optisch abdeckende Fläche 15 ist zwischen dem ersten und dem zweiten Teilbereich 12, 14 angeordnet und vorzugsweise als Metallisierungsschicht ausgebildet. Die Fläche 15 kann undurchsichtig oder auch semitransparent ausgebildet sein. Die Fläche 15 deckt in Blickrichtung 21 die Verbindungsnaht 18 ab. Im Ausführungsbeispiel ist die Fläche 15 so breit, dass sie teilweise auch den Überdeckungsbereich 20 des Bauelements 10 mit dem Körper 19 abdeckt.

Erfindungsgemäß wird bei dem mehrteiligen Bauelement 10 der erste Teilbereich 12 gebildet, dort bereichsweise die optisch abdeckende Fläche 15 ausgebildet und anschließend der zweite Teilbereich 14 ausgebildet, der die Fläche 15 kapselt. Die optisch abdeckende Fläche 15 kann mit PVD- und/oder CVD-Verfahren auf den ersten Teilbereich 12 aufgetragen werden oder mit anderen geeigneten Methoden aufgespritzt, aufgelegt, aufgedruckt, insbesondere mit Tampondruck, aufgeprägt, insbesondere mit Heißprägen.

Figur 2 zeigt als Beispiel für ein mehrteiliges Bauelement beispielhaft eine bevorzugte Leuchteneinheit 30, die insbesondere eine FahrzeugLeuchteneinheit darstellt. Ein transparentes erstes Teil 31 ist als Lichtscheibe mit einer Außenseite 33 ausgebildet und deckt ein zweites Teil 37, welches eine Reihe von Reflektorbereichen 28a, 28b, 28c, 28d mit zugehörigen Leuchtmitteln 25a, 25b, 25c, 25d umfasst, ab. Die Lichtscheibe stellt eine typische Sichtseite 43 der Leuchteneinheit 30 dar. Die Reflektorbereiche 28a, 28b, 28c, 28d sind zum transparenten ersten Teil 31 mit Elementen 26a, 26b, 26c, 26d abgeschlossen, die das von den Leuchtmitteln 25a, 25b, 25c, 25d abgestrahlte Licht in gewünschter und an sich bekannter Weise beeinflussen.

Das transparente erste Teil 31 ist vorzugsweise aus PMMA (Polymethylmethacrylat) oder PMMI (Polymethylmethacrylimide) gebildet.

Zwischen dem transparenten ersten Teil 31 und dem zweiten Teil 37 ist eine Verbindungsnaht 38 ausgebildet. Üblicherweise befindet sich das zweite Teil 37 im eingebauten Zustand innerhalb einer Karosserie und ist nicht von außen einsehbar, während das transparente erste Teil 37 sich an einer Sichtseite 34 der Leuchteneinheit 30 befindet. In Blickrichtung 41 ist randseitig am ersten Teil 31 in einem Sichtbereich 44 umlaufend eine optisch abdeckende Fläche 35 zwischen einem zur Verbindungsnaht 38 gewandten ersten Teilbereich 32 und einem nach außen gewandten zweiten Teilbereich 34 des ersten transparenten Teils angeordnet. Es ist erkennbar, dass die optisch abdeckende Fläche 35 in diesem Fall nur sehr dezent und schmal ausgeführt ist, um die unschöne Verbindungsnaht 38, typischerweise eine Schweißnaht, abzudecken. In Blickrichtung 41 ist dann jeweils die Verbindungsnaht 38 in einem prinzipiell einsehbaren Bereich 44 für einen Betrachter durch die optisch abdeckende Fläche 35 abgedeckt.

Bei der Herstellung der Leuchteneinheit 30 kann das als Lichtscheibe ausgebildete transparente erste Teil 31 als Spritzgussteil in einer Spritzgussform hergestellt werden, wobei zunächst der erste Teilbereich 32 spritzgegossen wird, in dem beispielsweise PMMA oder PMMI in die Spritzgussform eingebracht wird. Dabei wird ein Vorspritzling gebildet, der aus der Spritzgussform entnommen wird, Dann wird die optisch abdeckende Fläche 35 auf den ersten Teilbereich 32 aufgebracht, insbesondere aufgedampft oder aufgesputtert. Wird die optisch abdeckende Fläche 35 mit solchen PVD- oder CVD-Verfahren erzeugt, wird zur Maskierung der nicht zu beschichtenden Bereiche der Teilbereich 32 mit einer entsprechenden Lochmaske abgedeckt, oder es wird eine Maske in der Art einer aus der Photolithographie bekannten Photomaske aufgebracht, die nach der Beschichtung mit der optisch abdeckenden Fläche 35 wieder entfernt wird. Nach dem Wiedereinlegen in die Spritzgussform wird der erste Teilbereich 32 umspritzt und/oder überspritzt, wobei der zweite Teilbereich 34 gebildet wird. Das nunmehr fertig gebildete transparente erste Teil 31 wird anschließend mit dem zweiten Teil 37 an der Verbindungsnaht 38 fest verbunden. Ist das zweite Teil 37 auch aus Kunststoff gebildet, können das erste und zweite Teil 31, 37 miteinander verschweißt, insbesondere reibverschweißt werden.

### Bezugszeichenliste

- 10: Bauelement
- 11: transparenten ersten Teil
- 12: Teilbereich
- 13: Außenseite
- 14: Teilbereich
- 15: optisch abdeckende Fläche
- 16: Grenzfläche
- 17: zweites Teil
- 18: Verbindungsnaht
- 19: Körper
- 20: Überdeckungsbereich
- 21: Blickrichtung
- 22: Ansatz
- 23: Sichtseite
- 24: einsehbarer Bereich
- 25 a-d: Leuchtkörper
- 26 a-d: Element
- 27: Filter
- 28 a-d: Reflektorbereich
- 30: Leuchteneinheit
- 31: Transparentes erstes Teil
- 33: Außenseite
- 35: optisch abdeckende Fläche
- 37: Zweites Teil
- 38: Verbindungsnaht
- 41: Blickrichtung
- 43: Sichtseite
- 44: einsehbarer Bereich

## Patentansprüche

1. Mehrteiliges Bauelement mit einer Verbindungsnaht (18, 38) zwischen einem wenigstens bereichsweise transparenten ersten Teil (11, 31) und einem zweiten Teil (17, 37), wobei das transparente erste Teil (11, 31) mit seiner Außenfläche (13, 33) eine bestimmungsgemäße Sichtseite (23, 43) bildet, wobei zwischen der Verbindungsnaht (18, 38) und der Außenfläche (13, 33) eine optisch abdeckende Fläche (15, 35) angeordnet ist, die wenigstens bereichsweise die Verbindungsnaht (18, 38) von der Sichtseite (23, 43) her abdeckt, **dadurch gekennzeichnet, dass** sich die optisch abdeckende Fläche (15, 35) innerhalb des transparenten ersten Teils (11, 31) befindet.

2. Bauelement nach Anspruch 1, **dadurch gekennzeichnet, dass** das transparente erste Teil (11, 31) aus einem ersten, der Verbindungsnaht (18, 38) zugewandten Teilbereich (12, 32) und einem zweiten, der Außenfläche (13, 33) zugewandten Teilbereich (14, 34) gebildet ist.

3. Bauelement nach Anspruch 1 oder 2, **dadurch gekennzeichnet, dass** die optisch abdeckende Fläche (15, 35) zwischen dem ersten und dem zweiten Teilbereich (12, 14; 32, 34) angeordnet ist.

4. Bauelement nach einem der vorhergehenden Ansprüche, **dadurch gekennzeichnet, dass** die optisch abdeckende Fläche (15, 35) eine Metallisierungsschicht umfasst.

5. Bauelement nach einem der vorhergehenden Ansprüche, **dadurch gekennzeichnet, dass** die optisch abdeckende Fläche (15, 35) eine eingefärbte Kunststoffschicht umfasst.

6. Bauelement nach einem der vorhergehenden Ansprüche, **dadurch gekennzeichnet, dass** die optisch abdeckende Fläche (15, 35) ein Einlegteil umfasst.

7. Bauelement nach einem der vorhergehenden Ansprüche, **dadurch gekennzeichnet, dass** das erste Teil (11, 31) als Spritzgussteil ausgebildet ist.

8. Bauelement nach einem der vorhergehenden Ansprüche, **dadurch gekennzeichnet, dass** das erste Teil (31) und das zweite Teil (37) Bestandteile einer Leuchteneinheit (30), insbesondere einer FahrzeugLeuchteneinheit, sind.

9. Verfahren zur Herstellung eines mehrteiligen Bauelements (10, 30) nach einem der Ansprüche 1 bis 8, **dadurch gekennzeichnet, dass** ein erster Teilbereich (12, 32) eines transparenten Teils (11, 31) gebildet wird, dort bereichsweise eine optisch abdeckende Fläche (15, 35) ausgebildet wird und anschließend ein zweiter Teilbereich (14, 34) so ausgebildet wird, dass sich die optisch abdeckende Fläche (15, 35) innerhalb des transparenten ersten Teils (11, 31) befindet.

10. Verfahren nach Anspruch 9, **dadurch gekennzeichnet, dass** die optisch abdeckende Fläche (15, 35) mit PVD- und/oder CVD-Verfahren auf den ersten Teilbereich (12, 32) aufgetragen wird.

11. Verfahren nach Anspruch 9 oder 10, **dadurch gekennzeichnet, dass** die optisch abdeckende Fläche (15, 35) aufgespritzt wird.

12. Verfahren nach einem der Ansprüche 9 bis 11, **dadurch gekennzeichnet, dass** die optisch abdeckende Fläche (15, 35) auf dem ersten Teilbereich (12, 32) aufgelegt wird.

13. Verfahren nach einem der Ansprüche 9 bis 12, **dadurch gekennzeichnet, dass** die optisch abdeckende Fläche (15, 35) auf dem ersten Teilbereich (12, 32) aufgedruckt wird.

14. Verfahren nach einem der Ansprüche 9 bis 13, **dadurch gekennzeichnet, dass** die optisch abdeckende Fläche (15, 35) auf dem ersten Teilbereich (12, 32) aufprägt wird.

15. Verfahren nach einem der Ansprüche 9 bis 14, **dadurch gekennzeichnet, dass** der mit der optisch abdeckenden Fläche (15, 35) versehene erste Teilbereich (12, 32) mit einem zweiten Teilbereich (14, 34) fest verbunden wird.

16. Verfahren nach einem der Ansprüche 9 bis 15, **dadurch gekennzeichnet, dass** das transparente erste Teil (11, 31) als Spritzgussteil hergestellt wird.

17. Verfahren nach einem der Ansprüche 9 bis 16, **dadurch gekennzeichnet, dass** zunächst der erste Teilbereich (12, 32) spritzgegossen wird, dann die optisch abdeckende Fläche (15, 35) aufgebracht wird und der erste Teilbereich (12, 32) umspritzt und/oder überspritzt wird.

18. Verfahren nach einem der Ansprüche 9 bis 17, **dadurch gekennzeichnet, dass** das transparente erste Teil (11, 31) mit dem zweiten Teil (17, 37) verbunden wird.

19. Verfahren nach Anspruch 18, **dadurch gekennzeichnet, dass** das transparente erste Teil (11, 31) mit dem zweiten Teil (17, 37) verschweißt wird.

20. Verfahren nach Anspruch 18, **dadurch gekennzeichnet, dass** das transparente erste Teil (11, 31) mit dem zweiten Teil (17, 37) verklebt wird.

21. Verfahren nach Anspruch 18, **dadurch gekennzeichnet, dass** das transparente erste Teil (11, 31) mit dem zweiten Teil (17, 37) verschraubt wird.

22. Leuchteneinheit, insbesondere Fahrzeugleuchteneinheit, umfassend ein mehrteiliges Bauelement nach einem der Ansprüche 1 bis 8, mit einer Verbindungsnaht (18, 38) zwischen einem wenigstens bereichsweise transparenten ersten Teil (11, 31) und einem zweiten Teil (17, 37), **dadurch gekennzeichnet, dass** sich eine optisch abdeckende Fläche (15, 35) innerhalb des transparenten ersten Teils (11, 31) befindet.

## Claims

1. Multi-part element having a connecting seam (18, 38) between a first part (11, 31) transparent at least in some areas and a second part (17, 37), where the transparent first part (11, 31) forms with its outer surface (13, 33) a visible side (23, 43) in accordance with the intended purpose, where an optically covering surface (15, 35) is arranged between the connecting seam (18, 38) and the outer surface (13, 33) and covers the connecting seam (18, 38) from the visible side (23, 43) at least in some areas, **characterized in that** the optically covering surface (15, 35) is inside the transparent first part (11, 31).

2. Element according to Claim 1, **characterized in that** the transparent first part (11, 31) is formed from a first partial area (12, 32) facing the connecting seam (18, 38) and a second partial area (14, 34) facing the outer surface (13, 33).

3. Element according to Claim 1 or 2, **characterized in that** the optically covering surface (15, 35) is arranged between the first and the second partial areas (12, 14; 32, 34).

4. Element according to one of the preceding claims, **characterized in that** the optically covering surface (15, 35) comprises a metallization layer.

5. Element according to one of the preceding claims, **characterized in that** the optically covering surface (15, 35) comprises a coloured plastic layer

6. Element according to one of the preceding claims, **characterized in that** the optically covering surface (15, 35) comprises an inserted part.

7. Element according to one of the preceding claims, **characterized in that** the first part (11, 31) is designed as an injection-moulded part.

8. Element according to one of the preceding claims, **characterized in that** the first part (31) and the second part (37) are integral components of a light unit (30), in particular of a motor vehicle light unit.

9. Method for manufacturing a multi-part element (10, 30) according to one of Claims 1 to 8, **characterized in that** a first partial area (12, 32) of a transparent part (11, 31) is formed, an optically covering surface (15, 35) is formed there in some areas, and then a second partial area (14, 34) is formed such that the optically covering surface (15, 35) is inside the transparent first part (11, 31).

10. Method according to Claim 9, **characterized in that** the optically covering surface (15, 35) is deposited on the first partial area (12, 32) using PVD and/or CVD processes.

11. Method according to Claim 9 or 10, **characterized in that** the optically covering surface (15, 35) is sprayed on.

12. Method according to one of Claims 9 to 11, **characterized in that** the optically covering surface (15, 35) is laid on the first partial area (12, 32).

13. Method according to one of Claims 9 to 12, **characterized in that** the optically covering surface (15, 35) is printed on the first partial area (12, 32).

14. Method according to one of Claims 9 to 13, **characterized in that** the optically covering surface (15, 35) is embossed on the first partial area (12, 32).

15. Method according to one of Claims 9 to 14, **characterized in that** the first partial area (12, 32) provided with the optically covering surface (15, 35) is firmly connected to the second partial area (14, 34).

16. Method according to one of Claims 9 to 15, **characterized in that** the transparent first part (11,31) is made as an injection-moulded part.

17. Method according to one of Claims 9 to 16, **characterized in that** firstly the first partial area (12, 32) is injection-moulded, then the optically covering surface (15, 35) is applied and the first partial area (12, 32) is sprayed around and/or over.

18. Method according to one of Claims 9 to 17, **characterized in that** the transparent first part (11, 31) is connected to the second part (17, 37).

19. Method according to Claim 18, **characterized in that** the transparent first part (11,31) is welded to the second part (17, 37).

20. Method according to Claim 18, **characterized in that** the transparent first part (11, 31) is glued to the second part (17, 37).

21. Method according to claim 18, **characterized in that** the transparent first part (11, 31) is screwed to the second part (17, 37).

22. Light unit, in particular a motor vehicle light unit, comprising a multi-part element according to one of Claims 1 to 8, with a connecting seam (18, 38) between a first part (11, 31) transparent at least in some areas and a second part (17, 37), **characterized in that** an optically covering surface (15, 35) is located inside the transparent first part (11, 31).

## Revendications

1. Élément de construction à plusieurs parties avec un joint de raccord (18, 38) entre une première partie (11, 31) au moins en partie transparente et une seconde partie (17, 37), sachant que la première partie transparente (11, 31) forme avec sa surface extérieure (13, 33) une face visible conforme (23, 43), qu'est disposée entre le joint de raccord (18, 38) et la surface extérieure (13, 33) une surface optiquement recouvrante (15, 35) qui recouvre ou moins en partie le joint de raccord (18, 38) à partir de la face visible (23, 43), **caractérisé en ce que** la surface optiquement recouvrante (15, 35) se trouve dans la première partie transparente (11, 31).

2. Élément de construction selon la revendication 1, **caractérisé en ce que** la première partie transparente (11, 31) est formée d'une première section partielle (12, 32) tournée vers le joint de raccord (18, 38) et d'une seconde section partielle (14, 34) tournée vers la surface extérieure (13, 33).

3. Élément de construction selon la revendication 1 ou 2, **caractérisé en ce que** la surface optiquement recouvrante (15, 35) est disposée entre la première et la seconde section partielle (12, 14 ; 32, 34).

4. Élément de construction selon l'une des revendications précédentes, **caractérisé en ce que** la surface optiquement recouvrante (15, 35) comprend une couche de métallisation.

5. Élément de construction selon l'une des revendications précédentes, **caractérisé en ce que** la surface optiquement recouvrante (15, 35) comprend une couche de plastique colorée.

6. Élément de construction selon l'une des revendications précédentes, **caractérisé en ce que** la surface optiquement recouvrante (15, 35) comprend une pièce d'insertion.

7. Élément de construction selon l'une des revendications précédentes, **caractérisé en ce que** la première partie (11, 31) est conçue sous forme de pièce moulée par injection.

8. Élément de construction selon l'une des revendications précédentes, **caractérisé en ce que** la première partie (31) et la seconde partie (37) sont des composants d'une unité d'éclairage (30), en particulier d'une unité d'éclairage de véhicule.

9. Procédé de fabrication d'un élément de construction à plusieurs parties (10, 30) selon l'une des revendications 1 à 8, **caractérisé en ce qu'**est formée une première section partielle (12, 32) d'une partie transparente (11, 31), où est formée en partie une surface optiquement recouvrante (15, 35), et qu'une seconde section partielle (14, 34) est formée directement à côté, de telle manière que la surface optiquement recouvrante (15, 35) se trouve dans la première partie transparente (11, 31).

10. Procédé selon la revendication 9, **caractérisé en ce que** la surface optiquement recouvrante (15, 35) est appliquée sur la première section partielle (12, 32) par dépôt physique en phase vapeur et/ou par dépôt chimique en phase vapeur.

11. Procédé selon la revendication 9 ou 10, **caractérisé en ce que** la surface optiquement recouvrante (15, 35) est pulvérisée.

12. Procédé selon l'une des revendications 9 à 11, **caractérisé en ce que** la surface optiquement recouvrante (15, 35) est déposée sur la première section partielle (12, 32).

13. Procédé selon l'une des revendications 9 à 12, **caractérisé en ce que** la surface optiquement recouvrante (15, 35) est imprimée sur la première section partielle (12, 32).

14. Procédé selon l'une des revendications 9 à 13, **caractérisé en ce que** la surface optiquement recouvrante (15, 35) est gravée sur la première section partielle (12, 32).

15. Procédé selon l'une des revendications 9 à 14, **caractérisé en ce que** la première section partielle (12, 32) pourvue de la surface optiquement recouvrante (15, 35) est reliée de manière fixe à une seconde section partielle (14, 34).

16. Procédé selon l'une des revendications 9 à 15, **caractérisé en ce que** la première partie transparente (11, 31) est fabriquée sous forme de pièce moulée par injection.

17. Procédé selon l'une des revendications 9 à 16, **caractérisé en ce qu'**est tout d'abord coulée par injection la première section partielle (12, 32), puis la surface optiquement recouvrante (15, 35) est appliquée, et la première section partielle (12, 32) est enrobée par injection et/ou recouverte par injection.

18. Procédé selon l'une des revendication 9 à 17, **caractérisé en ce que** la première partie transparente (11, 31) est reliée à la seconde partie (17, 37).

19. Procédé selon la revendication 18, **caractérisé en ce que** la première partie transparente (11, 31) est soudée à la seconde partie (17, 37).

20. Procédé selon la revendication 18, **caractérisé en ce que** la première partie transparente (11, 31) est collée à la seconde partie (17, 37).

21. Procédé selon la revendication 18, **caractérisé en ce que** la première partie transparente (11, 31) est vissée à la seconde partie (17, 37).

22. Unité d'éclairage, en particulier unité d'éclairage de véhicule, comprenant un élément de construction à plusieurs parties selon l'une des revendications 1 à 8, avec un joint de raccord (18, 38) entre une première partie (11, 31) au moins en partie transparente et une seconde partie (17, 37), **caractérisée en ce qu'**une surface optiquement recouvrante (15, 35) se trouve dans la première partie transparente (11, 31).
